# EUROPEAN PATENT APPLICATION

(11) **EP 4 672 678 A1**
(43) Date of publication of application: **31.12.2025**
(21) Application number: 25184275.3
(22) Date of filing: 20.06.2025
(51) Int. Cl.: H04L 12/18, H04L 51/222, H04W 4/02, H04L 51/23

(54) **A METHOD OF LOCATION-DEPENDENT MESSAGING, A CLIENT DEVICE, A MESSAGING SERVER AND A COMPUTER PROGRAM**

(30) Priority: 27.06.2024 IT 202400014893
(71) Applicant: Vodafone Automotive S.p.A., 21100 Varese (VA) (IT)
(72) Inventor: DESCOMBES, Jean-Luc, London, W2 6BY (GB)
(74) Representative: Boult Wade Tennant LLP

(57) **Abstract**

A method of location-dependent messaging is provided. The method comprises communicating, from a messaging server to a client device, a first plurality of messages. The messaging server is configured to communicate messages relating to one or more messaging services. Each of the first plurality of messages relates to a respective messaging service. Each messaging service has an assigned subscription area for the client device. Each of the first plurality of messages relates to the assigned subscription area for the respective messaging service. The method further comprises determining that a rate at which the first plurality of messages are communicated from the messaging server to the client device exceeds a predetermined threshold. The method further comprises updating the assigned subscription area for the client device for each of the at least one of the one or more messaging services. An updated subscription area for each of the at least one of the one or more messaging services is smaller than an original subscription area for the respective messaging service. The method further comprises communicating, from the messaging server to the client device, a second plurality of messages. Each of the second plurality of messages relates to the assigned subscription area for the respective messaging service, incorporating the updated subscription area for each of the at least one of the one or more messaging services.

## Description

### Field of the invention

The invention relates to a location-dependent messaging system, based on a publish/subscribe mechanism. In particular, the invention relates to methods of managing messaging subscriptions in high message volume scenarios.

### Glossary

ETSI - European Telecommunications Standards Institute
TS - Technical Specification
DCC - Decentralized Congestion Control
ITS - Intelligent Transport Systems
V2X - Vehicle-to-everything
ICC - Intelligent Congestion Control
CAM - Cooperative Awareness Message
CPM - Collective Perception Message
DENM - Decentralized Environmental Notification Message
IVIM - Infrastructure to Vehicle Information Message
RTCMEM - Radio Technical Commission for Maritime Services Extended Message
MAPEM - Map Extended Message
MCM - Maneuver Coordination Message
SPATEM - Signal Phase And Timing Extended Message
SREM - Signal Request Extended Message
SSEM - Signal request Status Extended Message
VAM - Vulnerable Road User Awareness Message
MQTT - MQ ("Message Queue") Telemetry Transport
GUI - Graphical User Interface
UE - User Equipment
BS - Base Station
ABS - Advanced Base Station
BTS - Base Transceiver Station
BSS - Basic Service Set
ESS - Extended Service Set
AP - Access Point
NB - Node B (Radio Base Station Receiver)
eNB - Evolved Node B
gNB - Next-Generation Node B
TRP - Transmission and Reception Point
PS - Processing Server
TE - Terminal Equipment
MS - Mobile Station
MT - Mobile Terminal
UT - User Terminal
SS - Subscriber Station
PDA - Personal Digital Assistant
CDMA - Code Division Multiple Access
FDMA - Frequency Division Multiple Access
TDMA - Time Division Multiple Access
OFDMA - Orthogonal Frequency Division Multiple Access
SC-FDMA - Single Carrier Frequency Division Multiple Access
MC-FDMA - Multicarrier Frequency Division Multiple Access
UTRA - Universal Terrestrial Radio Access
GSM - Global System for Mobile Communications (2G)
GSMA - GSM Association
GPRS - General Packet Radio Service
EDGE - Enhanced Data Rates for GSM Evolution
IEEE - Institute of Electrical and Electronics Engineers
E-UTRA - Evolved UTRA
UMTS - Universal Mobile Telecommunications System (3G)
E-UMTS - Evolved UMTS
3GPP - 3rd Generation Partnership Project
DL - Downlink
UL - Uplink
LTE - Long Term Evolution (4G)
LTE-A - LTE-Advanced
NR - New Radio (5G)
FDD - Frequency Division Duplex
TDD - Time Division Duplex
CRS - Cell-specific Reference Signal
CSI-RS - Channel State Information Reference Signal
FPGA - Field-Programmable-Gate-Array
ASIC - Application-Specific-Integrated-Circuit
DSP - Digital-Signal-Processor
CD-ROM - Compact Disc Read-Only Memory
DVD-ROM - Digital Versatile Disc Read-Only Memory
ROM - Read-Only Memory
RAM - Random-Access Memory
EEPROM - Electrically Erasable Programmable Read-Only Memory
EPROM - Erasable Programmable Read-Only Memory

### Background

ETSI TS 103 141 V2.2.1, which is herein incorporated by reference, describes Decentralized Congestion Control (DCC). The aim of Decentralized Congestion Control (DCC) is to adapt the transmit parameters of an ITS station to improve reception. The DCC aims to provide channel resources among neighbouring ITS stations according to their needs. In case of a road traffic emergency the ITS station may transmit a burst of messages during a short period of time to maintain a safe road traffic environment, even during a high network utilization period.

US2023164769A1 describes a method of processing received messages from the V2X network. The method involves identifying high priority messages and sending them to the upper layers for further processing, without any feedback mechanism from the upper layers. The method further involves selecting messages that should be dropped at lower layers so that the load at the processor is not increased. This avoids dropping of high priority messages due to the system not being able to handle the rate at which the messages are being received.

### Summary

In US2023164769A1, the message data is received and dropped if it is determined to be low priority, so that high priority messages may still be processed. In contrast, the proposed invention provides method of location-dependent messaging in which the subscription settings of the client device are updated in times of high message volume. As a result, the message data relating to low priority services is no longer received by the client device. This may result in reduced utilisation of processing resources compared to the prior art.

A method of location-dependent messaging is provided. The method comprises communicating, from a messaging server to a client device, a first plurality of messages. The messaging server is configured to communicate messages relating to one or more messaging services. Each of the first plurality of messages relates to a respective messaging service. Each messaging service has an assigned subscription area for the client device. Each of the first plurality of messages relates to the assigned subscription area for the respective messaging service. The method further comprises determining that a rate at which the first plurality of messages are communicated from the messaging server to the client device exceeds a predetermined threshold. The method further comprises updating the assigned subscription area for the client device for each of the at least one of the one or more messaging services. An updated subscription area for each of the at least one of the one or more messaging services is smaller than an original subscription area for the respective messaging service. The method further comprises communicating, from the messaging server to the client device, a second plurality of messages. Each of the second plurality of messages relates to the assigned subscription area for the respective messaging service, incorporating the updated subscription area for each of the at least one of the one or more messaging services.

The method may further comprise communicating, from the client device to the messaging server, a first message subscription request. The first message subscription request may comprise an indication of the original subscription area.

The method may further comprise communicating, from the client device to the server, a second message subscription request. The second message subscription request may comprise an indication of the updated subscription area for each of the at least one of the one or more messaging services; and/or

The method may further comprise communicating, from the client device to the server, a second message subscription request. The second message subscription request may comprise a request to degrade the at least one of the one or more messaging services.

The indication of the original and/or updated subscription area may comprise one or more of:
a geographic region;
a location of the client device; and
a distance.

In some examples, the distance may be a radius of interest or a dimension of a grid square defining the area.

The method may further comprise periodically evaluating the rate at which the first and/or second plurality of messages are communicated from the messaging server to the client device and comparing the rate to the predetermined threshold.

The messaging server may be configured to communicate messages relating to a plurality of messaging services. Each messaging service may be assigned a priority setting at the client device. Each of the at least one of the plurality of messaging services may have a priority setting that is lower than a priority setting of each of a remainder of the plurality of messaging services.

In other words, the subscription area is reduced for the lower priority messaging services and the subscription area is not reduced for the remainder of the messaging services (i.e., the subscription area is not reduced for higher priority services, at least initially).

Initially, the degraded services are those that are designated as lower priority. Where there are more than two priority settings, services may be degraded in phases. If the threshold continues to be exceeded, the highest priority services may also be degraded.

In some examples, there are three priorities for the messaging services: Low Priority, Medium Priority, and High Priority.

The at least one of the plurality of messaging services may be a first subset of the plurality of messaging services. Each of a second subset of the plurality of messaging services may have a priority setting that is higher than a priority setting of each of the first subset of the plurality of messaging services but lower than a priority setting of each of a remainder of the plurality of messaging services not included in either the first subset or the second subset. The method may further comprise determining that a rate at which the second plurality of messages are communicated from the messaging server to the client device exceeds the predetermined threshold. The method may further comprise updating the assigned subscription area for the client device for each of the second subset of the plurality of messaging services. An updated subscription area for each of the second subset of the plurality of messaging services may be smaller than an original subscription area for the respective messaging service. The method may further comprise communicating, from the messaging server to the client device, a third plurality of messages. Each of the third plurality of messages may relate to the assigned subscription area for the respective messaging service, incorporating the updated subscription area for each of the first subset of the plurality of messaging services and the second subset of the plurality of messaging services.

The above method may relate to a scenario where there are at least three priority settings. The method defines degrading the messaging services having the next lowest priority setting after the lowest have already been degraded, if the rate still exceeds the threshold. In other words, if the threshold continues to be exceeded after the first subset of messaging services (e.g., low-priority messaging services) has been degraded, the second subset of messaging services (e.g., medium-priority messaging services) may also be degraded. The remainder of messaging services (e.g., high-priority messaging services) may retain the original (larger) subscription area as normal.

The messaging services belonging to the first subset may each have the same priority setting (e.g., low priority) and the messaging services belonging to the second subset may each have the same priority setting (e.g., medium priority). The remainder of the plurality of messaging services not included in either the first subset or the second subset may each have the same priority setting (e.g., high priority)

The updated smaller area for each of the first subset of the plurality of messaging services and the second subset of the plurality of messaging services may be the same size. In other words, the first subset of the plurality of messaging services and the second subset of the plurality of messaging services may be degraded to the same extent.

The method may further comprise communicating, from the client device to the server, a third message subscription request.

The third message subscription request may comprise an indication of the updated subscription area for each of the second subset of the plurality of messaging services.

Alternatively, the third message subscription request may comprise a request to degrade the second subset of the plurality of messaging services.

The method may further comprise determining that a rate at which the first plurality of messages, the second plurality of messages and/or the third plurality of messages are communicated from the messaging server to the client device exceeds the predetermined threshold. The method may further comprise suspending one or more of the messaging services. The method may further comprise communicating, from the messaging server to the client device, a fourth plurality of messages. The fourth plurality of messages may exclude messages corresponding to the one or more suspended messaging services.

As with degrading messaging services by the methods described above, the suspended services may be those that are designated as lower priority. Where there are more than two priority settings, services may be suspended in phases, if the threshold continues to be exceeded after a subset of messaging services has been suspended.

In other words, if the threshold continues to be exceeded after the first subset of messaging services (e.g., low-priority messaging services) has been suspended, the second subset of messaging services (e.g., medium-priority messaging services) may also be suspended. The remainder of messaging services (e.g., high-priority messaging services) may remain in a normal mode (with the original larger subscription area) or a degraded mode (with the reduced subscription area).

Each messaging service may support three functional modes: Normal, Degraded, and Suspended.

The method may further comprise communicating, from the client device to the server, a fourth message subscription request. The fourth message subscription request may comprise a request to suspend the one or more messaging services.

The method may further comprise determining that a rate at which the first plurality of messages, the second plurality of messages, the third plurality of messages and/or the fourth plurality of messages are communicated from the messaging server to the client device does not exceed the predetermined threshold. The method may further comprise determining that at least a predetermined period of time has elapsed since the assigned subscription area for the client device was last updated for one or more messaging services or since one or more messaging services were suspended. The method may further comprise reverting the assigned subscription area for the client device for each of the at least one of the one or more messaging services to the original subscription area and/or resuming the one or more suspended messaging services. The method may further comprise communicating, from the messaging server to the client device, a fifth plurality of messages, wherein the fifth plurality of messages relates to the assigned subscription area for the respective messaging service, incorporating the original subscription area for each of the at least one of the one or more messaging services.

The messaging server may be a Vehicle-to-everything, V2X, messaging server.

The one or more messaging services may comprise one or more of:
Cooperative Awareness Messages, CAM;
Collective Perception Messages, CPM;
Decentralized Environmental Notification Messages, DENM;
Infrastructure to Vehicle Information Messages, IVIM;
Radio Technical Commission for Maritime Services Extended Messages, RTCMEM;
MAP topology Extended Messages, MAPEM;
Maneuver Coordination Messages, MCM;
Signal Phase And Timing Extended Messages, SPATEM;
Signal Request Extended Messages, SREM;
Signal request Status Extended Messages, SSEM; and
Vulnerable Road User Awareness Messages, VAM.

A client device configured to perform the methods described above is also provided.

A messaging server configured to perform the methods described above is also provided.

A computer program comprising instructions that, when executed on a processor, cause the processor to perform the methods described above is also provided.

### Brief description of the drawings

Fig. 1A illustrates messaging flow in a scenario in which the location-dependent messaging system is operating normally and there is no overload.
Fig. 1B is a map illustrating locations of the entities involved in the messaging flow illustrated in Fig. 1A and relevant geographic areas.
Fig. 2A illustrates messaging flow in a scenario in which the location-dependent messaging system experiences an overload and ICC is not implemented.
Fig. 2B is a map illustrating locations of the entities involved in the messaging flow illustrated in Fig. 2A and relevant geographic areas.
Fig. 3A illustrates messaging flow in a scenario in which the location-dependent messaging system experiences an overload and ICC is implemented to alleviate the messaging congestion.
Fig. 3B is a map illustrating locations of the entities involved in the messaging flow illustrated in Fig. 3A and relevant geographic areas.
Fig. 4 illustrates a schematic of the Intelligent Congestion Control system.
Fig. 5 illustrates a schematic of a state machine showing operation of the Intelligent Congestion Control Service.

### Detailed description

The present disclosure relates to a location-based messaging server, which may also be referred to as a "Geomessaging server". The messaging server may operate according to a publish-subscribe pattern, in which messages are categorised according to particular messaging services (also referred to as a particular messaging type) and associated with a particular location. Client devices subscribe to location-based messaging from the server and receive messages associated with a specific area. The subscription area may be different for each messaging service.

The client device may subscribe to a messages in a rectangular area, referred to as a "tile". The overall geographic region may be divided into a grid of tiles. The client device may be subscribed to messages in the tile in which it is currently located. The client device may further be subscribed to the eight adjacent tiles in the grid.

When a client device subscribes to receive messages from messaging services for a subscription area, it is not known ahead of time how may messages will be received (the rate at which messages will arrive). A client device will have a limited capacity to process messages that are received. Therefore, there will be a maximum rate at which messages can be received and usefully processed.

The present invention therefore proposes a method of limiting the rate at which messages are received to a maximum rate.

In order to implement the proposed method, a method of measuring the rate at which messages are received (the number of messages received each second) is provided. If the measured rate exceeds a threshold (the maximum allowed rate), actions are performed to reduce the flow of messages from the Geomessaging server to the client device. By limiting the rate to a maximum allowable rate, the proposed methods enable the client device to keep processing high priority messages.

It is an aim of the proposed methods to keep high priority messaging services working, despite high traffic volume (rather than to simply turn off functionality). Lower priority functionality may be temporarily supressed to keep the high priority functionality operational.

As discussed above, one aim of the proposed Intelligent Congestion Control feature is to prevent an overload of the V2X client, in case it receives more messages than it can process on the MQTT interface. The Intelligent Congestion Control mechanism measures continuously the number of incoming messages. In case of overload, it automatically reduces incoming traffic by reducing the number and the size of the subscribed areas of all the services (CAM Service, DENM Service, IVIM Service, SPATEM Service, MAPEM Service, and the like). If the reduction is not enough it can stop momentarily the low-priority services to guarantee that high-priority services are still running properly.

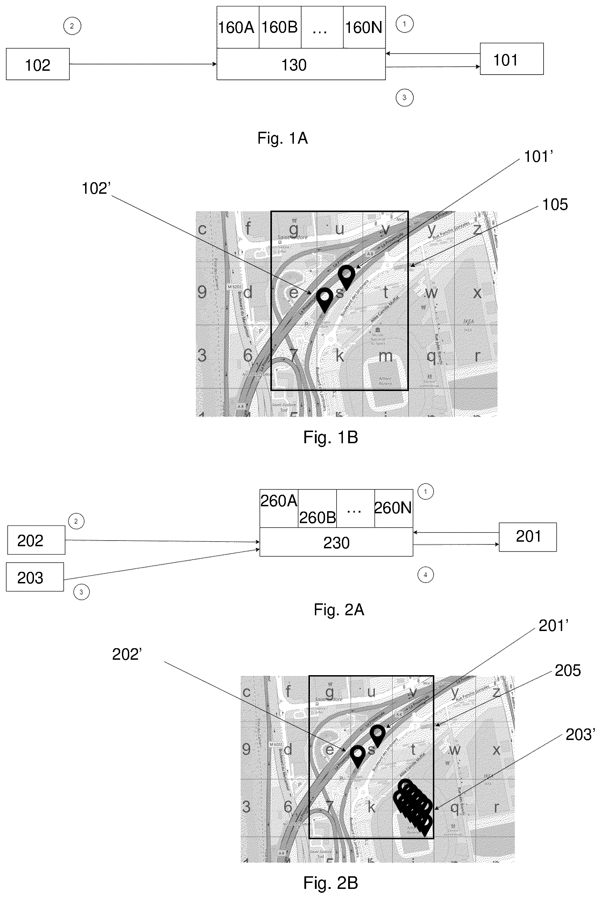

Fig. 1A illustrates messaging flow in a NoOverload Scenario. Fig. 1B is a map illustrating locations of the entities involved and relevant geographic areas. These diagrams provide a general example of how a Geo-Messaging server 130 based on a Publish/Subscribe mechanism works. The method is illustrated with reference to the following numbered steps, which correspond to numbered elements illustrated in Fig. 1A.
1. A first Client 101 at a first location 101' subscribes to all messages of a first Message Type 160A relevant to a first geographic area 105.
2. A second Client 102 periodically publishes a message of the first Message Type 160A. The message is called Message2 and is linked to a location of the second client 102'.
3. The first Client 101 receives the messages published by the second Client 102.

Fig. 2A illustrates messaging flow in an Overload scenario without ICC. Fig. 2B is a map illustrating locations of the entities involved and relevant geographic areas. These diagrams show how potentially relevant messages may be overlooked due to an overload on the client side. The method is illustrated with reference to the following numbered steps, which correspond to numbered elements illustrated in Fig. 2A.
1. A first Client 201 at a first location 201' subscribes to all messages of a first Message Type 260A relevant to a first geographic area 205.
2. A second Client 202 periodically publishes a message of the first Message Type 260A. The message is called Message2 and is linked to a location of the second client 202'.
3. Thousands of Clients 203 at a third location 203' periodically publish messages of the first Message Type 260A.
4. The first Client 201 receives thousands of messages.

As a result of receiving thousands of messages, the first client 201 may be overwhelmed by messages and may freeze or may need to discard the messages. This can lead to the message from the second Client 202 (which is more relevant than the messages from the thousands of clients 203) being missed.

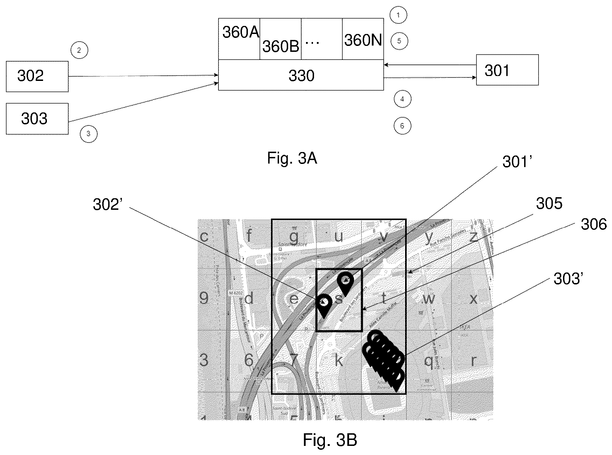

Fig. 3A illustrates messaging flow in an Overload scenario with ICC. Fig. 3B is a map illustrating locations of the entities involved and relevant geographic areas. These diagrams show how an overload on the client side may be avoided by the proposed methods. The first client may modify its subscriptions to control the amount of incoming messages to avoid congestion. The method is illustrated with reference to the following numbered steps, which correspond to numbered elements illustrated in Fig. 3A.
1. A first Client 301 at a first location 301' subscribes to all messages of a first Message Type 360A relevant to a first geographic area 305.
2. A second Client 302 periodically publishes a message of the first Message Type 360A. The message is called Message2 and is linked to a location of the second client 302'.
3. Thousands of Clients 303 at a third location 303' periodically publish messages of the first Message Type 360A.
4. The first Client 301 receives thousands of messages.
5. The first Client 301 unsubscribes to messages of the first Message Type 360A relevant to the first geographic area 305. The first Client 301 subscribes to messages of the first Message Type 360A relevant to a second geographic area 306. The second geographic area is smaller than the first geographic area.
6. The first Client 301 receives the messages published by the second Client 302.

As can be seen form the above, the proposed methods do not receive and discard the messages, in contrast to some prior art methods. Instead, the subscription settings of the client device are adjusted on the Geomessaging server side to control the flow of messages and reduce the rate at which messages are received by the client. In this way, the rate of messages is kept below a threshold rate and the client device can maintain a state in which the received messages can be processed correctly. In this way, the client device may ensure that high priority messages are processed correctly and high priority services function correctly.

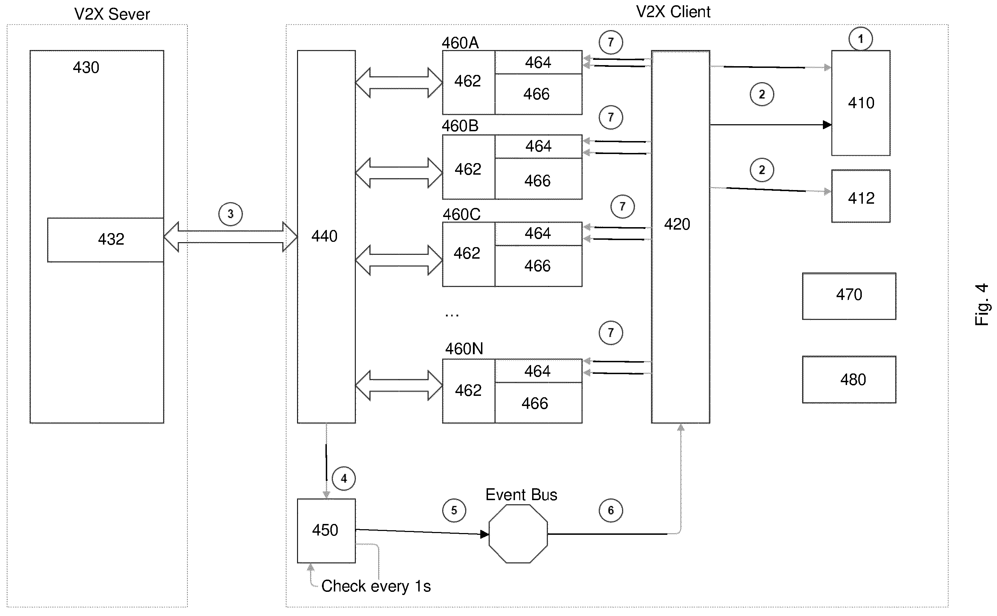

A schematic of the Intelligent Congestion Control system is illustrated in Fig. 4. An example method is illustrated with reference to the following numbered steps, which correspond to numbered elements illustrated in Fig. 4.
1. Configuration parameters are SET in an ICC Configuration Object 410. In particular, the ICC Configuration Object 410 stores a priority setting for each Service and the maximum allowed number of messages per second (e.g., 200).
2. The Intelligent Congestion Control Service 420 retrieves configuration from the ICC Configuration Object 410 and from a Configuration Object 412 when the Intelligent Congestion Control Service 420 starts.
3. The MQTT broker 430 delivers messages to the V2X client. In particular, a MQTT client 432 running on the MQTT broker may deliver the messages to a MQTT client 440 of the V2X client. The MQTT client 432 running on the MQTT broker may operate a message queue having a maximum queue size (e.g., 1000). The MQTT client 432 may discard new messages when the queue is full.
4. The MQTT Client 440 notifies the Incoming Traffic Measurement Service 450.
5. At regular intervals (e.g., each second), the Incoming Traffic Measurement Service 450 generates an Event including the measurements taken over a predetermined period (e.g., for the past 5 seconds). The Event (e.g., an Incoming Traffic Measurement Event) may be sent to an Event Bus and forwarded to the ICC Service.
6. The ICC Service 420 uses this event to determine if the V2X client is in "Overload" or "No Overload" condition.
7. Then the ICC Service 420 automatically adjusts the mode of each service 460A-460N. The ICC Service 420 may adjust the mode of each service using GET and SET functions. Each service comprises a Virtual MQTT Client 462, a Dynamic Zone Algorithm 464, and a State Machine 466.

The services 460A-460N may include CAM, VAN, DENM, IVIM, CPM, SPATEM, and MAPEM. Each service supports 3 functional modes (Normal, Degraded, and Suspended).

The V2X client also comprises a Service Priority Enumeration 470, which comprises the following priority levels:
- Low Priority
- Medium Priority
- High Priority

The V2X client also comprises a Service Mode Enumeration 480, which comprises the following modes:
- Normal Mode
- Degraded Mode
- Suspended Mode

In the normal mode the client device may subscribe to a full area, which may include a tile in which the client device is presently located and 8 adjacent tiles.

In the degraded mode, the subscription area may be reduced. In this mode, the client device may subscribe to an area including the tile in which the client device is presently located and the one next closest tile.

In the suspended mode, the client device may temporarily unsubscribe to messages on the respective messaging service.

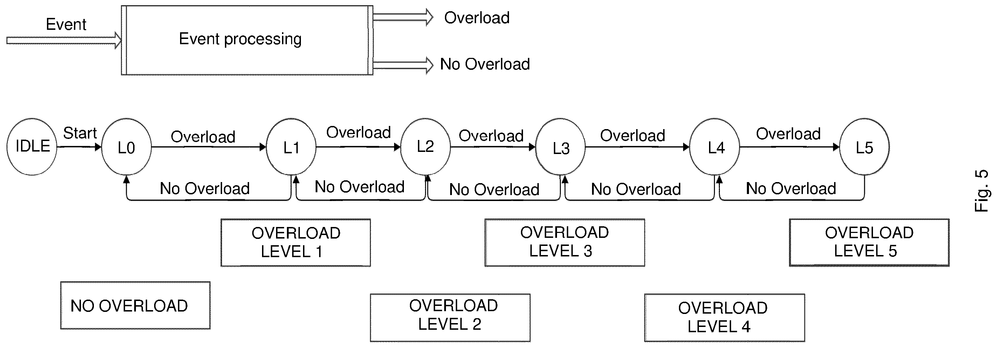

Fig. 5 illustrates a schematic of a state machine illustrating operation of the Intelligent Congestion Control Service.

The ICC Service dynamically changes the mode of each service to regulate/adjust the incoming traffic.

In Normal Mode, the Service subscribes normally to the tiles defined by the Dynamic Zone Algorithm 464 attached to the service.

In Degraded Mode, the Service subscribes to a maximum of 2 tiles (current one & closest one). Where different tile sizes are supported, the size of the 2 tiles is the smaller size. For example, the Dynamic Zone Algorithm 464 may support 3 tile sizes (such as 5, 6, and 7) and the tile size may be selected based on the speed of the vehicle. Then, in Degraded Mode, the tile size will always be the smallest of the available options (e.g., 7), whatever the speed of the vehicle.

In Suspended Mode, the Service doesn't subscribe to any tile. The Service no longer receives any messages.

In some examples, a priority is assigned statically to each Service. There are 3 levels of priority:
- Low Priority
- Medium Priority
- High Priority

For example, the Services indicated below may be assigned the following priorities:
- DENM: High Priority
- IVIM: Medium Priority
- MAPEM: Medium Priority
- SPATEM: Medium Priority
- CAM: Low Priority
- VAM: Low Priority
- CPM: Low Priority

In case of traffic congestion, the ICC Service will degrade or suspend the services with lower priority first.

Each time an Event is received by the ICC Service (see step 6 above), the ICC Service determines whether an overload condition has been detected and either remains in the current state or transitions to a different state. This is illustrated as the "Event Processing" logic in Fig. 5. If the total number of messages received is greater than an overload threshold then an overload condition is detected and the ICC Service transitions to the next overload level. If the total number of messages received is less than the overload threshold then an overload condition is not detected. If an overload condition is not detected and the system has been in the current state for greater than a predetermined length of time (e.g., 10 seconds) then the ICC Service transitions to the previous overload level. If an overload condition is not detected and the system has been in the current state for less than the predetermined length of time then the ICC Service remains at the current overload level.

The above logic may be implemented by the following example code:

```
 boolean trafficlsAboveTheThreshold= totalNumberOfMessagesReceived > threshold;
 if (trafficlsAboveTheThreshold) {
 overload=true;
 }
 if (!trafficlsAboveTheThreshold && (timelnThisStatelnMs >= 10000L)) {
 noOverload=true;
 }
```

In the overload states, each Service may be placed into a Service Mode based on the priority assigned to each service. For example:
- In the NO OVERLOAD state (L0):
   ∘ SET Low-Priority Services into Normal Mode
   ∘ SET Medium-Priority Services into Normal Mode
   ∘ SET High-Priority Services into Normal Mode
- In the OVERLOAD LEVEL 1 state (L1)
   ∘ SET Low-Priority Services into Degraded Mode
   ∘ SET Medium-Priority Services into Normal Mode
   ∘ SET High-Priority Services into Normal Mode
- In the OVERLOAD LEVEL 2 state (L2)
   ∘ SET Low-Priority Services into Degraded Mode
   ∘ SET Medium-Priority Services into Degraded Mode
   ∘ SET High-Priority Services into Normal Mode
- In the OVERLOAD LEVEL 3 state (L3)
   ∘ SET Low-Priority Services into Suspended Mode
   ∘ SET Medium-Priority Services into Degraded Mode
   ∘ SET High-Priority Services into Normal Mode
- In the OVERLOAD LEVEL 4 state (L4)
   ∘ SET Low-Priority Services into Suspended Mode
   ∘ SET Medium-Priority Services into Suspended Mode
   ∘ SET High-Priority Services into Normal Mode
- In the OVERLOAD LEVEL 5 state (L5)
   ∘ SET Low-Priority Services into Suspended Mode
   ∘ SET Medium-Priority Services into Suspended Mode
   ∘ SET High-Priority Services into Degraded Mode

The above is an illustrative example of some possible overload levels but is not exhaustive. For example, another overload level could be provided in which all services are degraded or in which Low-Priority Services are suspended and the others are degraded.

The proposed methods may enable the Client to regulate the number of incoming messages. In order to do so, the proposed methods may degrade or suspend the low and medium-priority services to keep the high-priority services functional.

Two example use cases are proposed below.

In a first example use case, which is referred to as "The Stadium Use Case", a large number of messages are associated with pedestrians in a crowded area (e.g., 600 spectators in a stadium). For example, the client device may receive 600 messages on the CAM messaging service. These messages may be of low importance. The client device may also receive 2 messages on the DENM messaging service. These two messages may be of high importance. In this case, the expected result is that the client device (e.g., a car driving nearby) should be able to see the 2 DENM when it enters their relevant area and the app should not freeze.

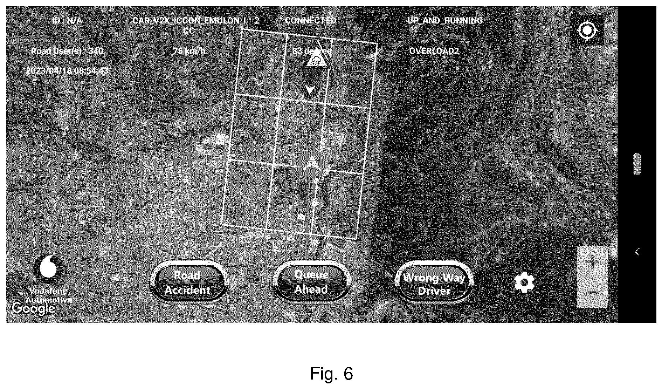

In a second example use case, which is referred to as "The Highway Traffic Jam Use Case", a large number of messages are associated with vehicles in a crowded area (e.g., 600 cars in a queue). For example, the client device may receive 600 messages on the CAM messaging service. These messages may be of low importance. The client device may also receive 2 messages on the DENM messaging service. These two messages may be of high importance. In this case, the expected result is that the client device (e.g., a car driving nearby) should be able to see the 2 DENM when it enters their relevant area and the app should not freeze. An example GUI for the second use case is illustrated in Fig. 6.

In either case, the rate of messages received by the client device may initially increase above the threshold when the client device enters the relevant area. At this point, the client device may increase the overload level to control the flow of messages. As a result, the rate of messages should decrease so that the 2 messages of high importance are not missed.

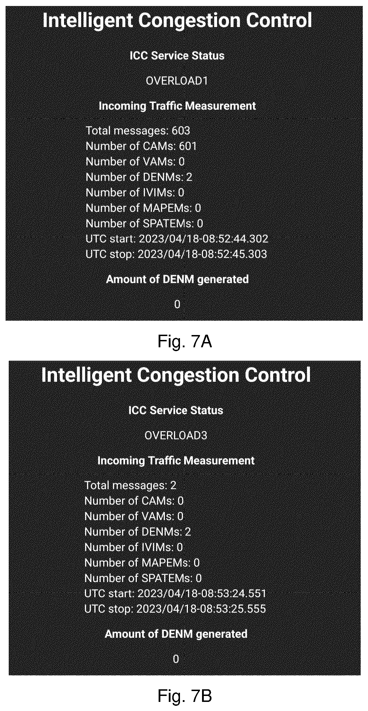

Example output (for either of the cases described above) is illustrated in Fig. 7A and Fig. 7B. Fig. 7A illustrates ICC service status and incoming traffic measurement at the instant the client device enters the crowded area. As can be seen in Fig. 7A, the total number of messages is 603 for the relevant period, which is above the threshold for the client device. Therefore the client device increases the overload level and reduces the subscription area for low priority services. At this stage, the client device is unable to process the incoming messages and may discard some or all of the messages to avoid freezing. This may include the high priority DENMs, which may not be properly processed. If the proposed methods were not implemented, the client device would remain in this mode and would not be able to process all messages properly until the client device left the area and the rate reduced to a manageable level. This may lead to impaired high priority functionality or safety issues if not addressed.

Fig. 7B illustrates ICC service status and incoming traffic measurement after the overload level has been increased. As can be seen in Fig. 7B, the total number of messages is 2 for the relevant period, which is below the threshold for the client device. Therefore, the client device is able to processes the high priority DENMs.

Fig. 7A illustrates that the ICC Service Status is OVERLOAD1 and Fig. 7B illustrates that the ICC Service Status is OVERLOAD3. In order to reduce the rate of incoming messages to a manageable level, the client device may need to increase the overload level more than once. This will depend on the settings of the individual overload levels and the source of the large volume of messages.

Whilst the above examples refer to a V2X messaging system, the present invention could be applied to any location-based messaging system that comprises a messaging server that handles messages that are associated with a location. For example, the invention could be applied to a chat application or a local news application.

In some examples, in order to subscribe to receive messages for a specific area, the client device generates a subscription request message and sends the request to the server. The client device then receives messages from the server, in accordance with the subscription request.

Messages may be published to the server from one or more publishing client devices. The server may then forward the messages to subscribed client devices, in accordance with the subscription settings of the subscribed client devices.

The subscribed client device may also be a publishing client device. The client device may publish messages to the server and receive messages from the server published by other client devices.

Messages may be received by the client devices directly from the Geomessaging server (rather than shared directly between client devices in a peer-to-peer arrangement).

The client device may send a message to the server to assign a location of the client device. The server may send messages to the client device in accordance with the client device's subscription settings and the location of the client device, as assigned by the client device. In other words, the client device reports its own location.

The client device can subscribe/unsubscribe flexibly to any type of message and subscription area.

In the examples provided above, the method may be performed by the client device (e.g., the V2X client running on the client device). In particular, the client device may measure the rate at which incoming messages are received and send a message to the server to update the subscriptions, if the rate exceeds the threshold.

Alternatively, the server may measure the rate at which messages are sent to the client and update the client's subscriptions to reduce the rate. Therefore, the invention may be implemented at the server.

In some examples, the V2X client may define the priority of each of the messaging services. The messaging services may have different purposes and some may be defined as higher priority than others due to the nature of the messages. For example, services that are critical to safety may be ranked as high priority, while services that are for information or convenience may be ranked as lower priority. Services that are needed for functionality but not for safety may be ranked as medium/high priority. Services that improve the quality of functionality may be ranked as medium/low priority, depending on the functionality.

Although specific embodiments have been described above, the skilled person will understand that various modifications and variations are possible. For example, whilst the disclosure is described in relation to existing network architecture, it will be understood that changes to the architecture (and/or nomenclature) are possible, but the present disclosure may still be applicable in this case. Also, combinations of any specific features shown with reference to one embodiment or with reference to multiple embodiments are also provided, even if that combination has not been explicitly detailed herein.

Where this application refers to a server, for instance, this may actually be a pair of servers (primary and failover), for redundancy. Moreover, the skilled person would understand that the server may actually be provided by a plurality of servers that are geographically distributed.

The one or more client devices may be mobile devices (such as User Equipments, UEs) communicatively connected to other devices and servers via a Radio Access Network, such as a cellular network. Examples of the UE include various fixed and mobile devices that transmit and receive user data and/or various kinds of control information to and from a base station. The UE may be referred to as a terminal equipment (TE), a mobile station (MS), a mobile terminal (MT), a user terminal (UT), a subscriber station (SS), a wireless device, a personal digital assistant (PDA), a wireless modem, a handheld device, etc.

The client device may be communicatively connected via a wireless multiple access system. Examples of multiple access systems include CDMA, FDMA, TDMA, OFDMA, SC-FDMA, and MC-FDMA. CDMA may be embodied through radio technology such as UTRA or CDMA2000. TDMA may be embodied through radio technology such as GSM, GPRS, or EDGE. OFDMA may be embodied through radio technology such as IEEE 802.11 (Wi-Fi), IEEE 802.16 (WiMAX), IEEE 802.20, or E-UTRA. UTRA is a part of a UMTS. 3GPP LTE is a part of E-UMTS using E-UTRA. 3GPP LTE employs OFDMA in DL and SC-FDMA in UL. LTE-A is an evolved version of 3GPP LTE. 3GPP NR employs OFDMA for both downlink and uplink and can operate in both FDD and TDD. The technical features of the present invention are not limited to any one particular wireless multiple access system.

Whilst the above examples are described in relation to specific technologies (e.g., MQTT and V2X), these methods, techniques, apparatuses, and systems may be applied to a variety of technologies.

The examples may be carried out on any suitable data processing device, such as a personal computer, laptop, mobile telephone, server, virtual machine, and the like. The above description of the systems and methods has been simplified for purposes of discussion, and is intended to provide a specific example to illustrate the invention. Different types of systems and methods may be used, as will be appreciated by the skilled person. It will be appreciated that the boundaries between logic blocks are merely illustrative and that alternative embodiments may merge logic blocks or elements, or may impose an alternate decomposition of functionality upon various logic blocks or elements.

It will be appreciated that the above-mentioned functionality may be implemented as one or more corresponding modules as hardware and/or software. For example, the above-mentioned functionality may be implemented as one or more software components for execution by a processor of the system. Alternatively, the above-mentioned functionality may be implemented as hardware, such as on one or more FPGAs, and/or one or more ASICs, and/or one or more DSPs, and/or other hardware arrangements. Method steps implemented in flowcharts contained herein, or as described above, may each be implemented by corresponding respective modules. Moreover, multiple method steps implemented in flowcharts contained herein, or as described above, may be implemented together by a single module.

Any of the methods described herein may be implemented as computer software or a "computer program". The computer program may be configured to control a network entity (e.g., a server or group of servers) to perform any method according to the disclosure. A network entity (e.g., a server or group of servers) within a network (such as a cellular network) may also be provided, configured to operate in accordance with certain methods disclosed herein. For example, the network entity may include a processor and at least one communication interface, particularly comprising one or both of a transmitter and receiver.

A storage medium and a transmission medium carrying the computer program are also provided. The computer program may comprise one or more instructions, or code, that, when executed by a computer, causes the methods described to be performed. A computer program may be a sequence of instructions designed for execution on a computer system, and may include a subroutine, a function, a procedure, a module, an object method, an object implementation, an executable application, an applet, a servlet, source code, object code, a shared library, a dynamic linked library, and/or other sequences of instructions designed for execution on a computer system. The storage medium may be a magnetic disc (such as a hard drive or a floppy disc), an optical disc (such as a CD-ROM, a DVD-ROM, or a Blu-ray disc), or a memory (such as a ROM, a RAM, EPROM, EEPROM, Flash memory or a portable/removable memory device), etc. The transmission medium may be a communications signal, a data broadcast, a communications link between two or more computers, etc.

Each feature disclosed in this specification, unless stated otherwise, may be replaced by alternative features serving the same, equivalent, or similar purpose. Thus, unless stated otherwise, each feature disclosed is one example only of a generic series of equivalent or similar features.

As used herein, including in the claims, unless the context indicates otherwise, singular forms of the terms herein are to be construed as including the plural form and vice versa. For instance, unless the context indicates otherwise, a singular reference herein including in the claims, such as "a" or "an" (such as a client device, a server, a message or a request) means "one or more" (for instance one or more client devices, one or more servers, one or more messages, or one or more requests). Throughout the description and claims of this disclosure, the words "comprise", "including", "having" and "contain" and variations of the words, for example "comprising" and "comprises" or similar, mean "including", and are not intended to (and do not) exclude other components.

The use of any and all examples, or exemplary language ("for instance", "such as", "for example" and like language) provided herein, is intended merely to better illustrate the invention, and does not indicate a limitation on the scope of the invention unless otherwise claimed. No language in the specification should be construed as indicating any non-claimed element as essential to the practice of the invention.

Any steps described in this specification may be performed in any order or simultaneously unless stated or the context requires otherwise. Moreover, where a step is described as being performed after a step, this does not preclude intervening steps being performed.

All of the aspects and/or features disclosed in this specification may be combined in any combination, except combinations where at least some of such features and/or steps are mutually exclusive. As described herein, there may be particular combinations of aspects that are of further benefit, such the aspects of determining a set of compensation parameters and applying a set of compensation parameters to measurements. In particular, the preferred features of the invention are applicable to all aspects of the invention and may be used in any combination. Likewise, features described in non-essential combinations may be used separately (not in combination).

A method of manufacturing and/or operating any of the devices disclosed herein is also provided. The method may comprise steps of providing each of the features disclosed and/or configuring or using the respective feature for its stated function.

## Claims

1. A method of location-dependent messaging, the method comprising:
communicating, from a messaging server to a client device, a first plurality of messages, wherein the messaging server is configured to communicate messages relating to one or more messaging services, wherein each of the first plurality of messages relates to a respective messaging service, wherein each messaging service has an assigned subscription area for the client device, and wherein each of the first plurality of messages relates to the assigned subscription area for the respective messaging service;
determining that a rate at which the first plurality of messages are communicated from the messaging server to the client device exceeds a predetermined threshold;
updating the assigned subscription area for the client device for each of the at least one of the one or more messaging services, wherein an updated subscription area for each of the at least one of the one or more messaging services is smaller than an original subscription area for the respective messaging service;
communicating, from the messaging server to the client device, a second plurality of messages, wherein each of the second plurality of messages relates to the assigned subscription area for the respective messaging service, incorporating the updated subscription area for each of the at least one of the one or more messaging services.

2. The method of claim 1, further comprising:
communicating, from the client device to the messaging server, a first message subscription request, wherein the first message subscription request comprises an indication of the original subscription area.

3. The method of claim 1 or claim 2, further comprising:
communicating, from the client device to the server, a second message subscription request, wherein the second message subscription request comprises an indication of the updated subscription area for each of the at least one of the one or more messaging services; and/or
communicating, from the client device to the server, a second message subscription request, wherein the second message subscription request comprises a request to degrade the at least one of the one or more messaging services.

4. The method of claim 2 or claim 3, wherein the indication of the original and/or updated subscription area comprises one or more of:
a geographic region;
a location of the client device; and
a distance.

5. The method of any preceding claim, further comprising:
periodically evaluating the rate at which the first and/or second plurality of messages are communicated from the messaging server to the client device and comparing the rate to the predetermined threshold.

6. The method of any preceding claim, wherein the messaging server is configured to communicate messages relating to a plurality of messaging services, wherein each messaging service is assigned a priority setting at the client device,
wherein each of the at least one of the plurality of messaging services has a priority setting that is lower than a priority setting of each of a remainder of the plurality of messaging services.

7. The method of claim 6, wherein the at least one of the plurality of messaging services is a first subset of the plurality of messaging services, wherein each of a second subset of the plurality of messaging services has a priority setting that is higher than a priority setting of each of the first subset of the plurality of messaging services but lower than a priority setting of each of a remainder of the plurality of messaging services not included in either the first subset or the second subset, wherein the method further comprises:
determining that a rate at which the second plurality of messages are communicated from the messaging server to the client device exceeds the predetermined threshold;
updating the assigned subscription area for the client device for each of the second subset of the plurality of messaging services, wherein an updated subscription area for each of the second subset of the plurality of messaging services is smaller than an original subscription area for the respective messaging service;
communicating, from the messaging server to the client device, a third plurality of messages, wherein each of the third plurality of messages relates to the assigned subscription area for the respective messaging service, incorporating the updated subscription area for each of the first subset of the plurality of messaging services and the second subset of the plurality of messaging services.

8. The method of claim 7 further comprising:
communicating, from the client device to the server, a third message subscription request, wherein the third message subscription request comprises an indication of the updated subscription area for each of the second subset of the plurality of messaging services; or
communicating, from the client device to the server, a third message subscription request, wherein the third message subscription request comprises a request to degrade the second subset of the plurality of messaging services.

9. The method of any preceding claim, further comprising:
determining that a rate at which the first plurality of messages, the second plurality of messages and/or the third plurality of messages are communicated from the messaging server to the client device exceeds the predetermined threshold;
suspending one or more of the messaging services;
communicating, from the messaging server to the client device, a fourth plurality of messages, wherein the fourth plurality of messages excludes messages corresponding to the one or more suspended messaging services.

10. The method of any preceding claim, further comprising:
determining that a rate at which the first plurality of messages, the second plurality of messages, the third plurality of messages and/or the fourth plurality of messages are communicated from the messaging server to the client device does not exceed the predetermined threshold;
determining that at least a predetermined period of time has elapsed since the assigned subscription area for the client device was last updated for one or more messaging services or since one or more messaging services were suspended;
reverting the assigned subscription area for the client device for each of the at least one of the one or more messaging services to the original subscription area and/or resuming the one or more suspended messaging services;
communicating, from the messaging server to the client device, a fifth plurality of messages, wherein the fifth plurality of messages relates to the assigned subscription area for the respective messaging service, incorporating the original subscription area for each of the at least one of the one or more messaging services.

11. The method of any preceding claim, wherein the messaging server is a Vehicle-to-everything, V2X, messaging server.

12. The method of claim 11, wherein the one or more messaging services comprises one or more of:
Cooperative Awareness Messages, CAM;
Collective Perception Messages, CPM;
Decentralized Environmental Notification Messages, DENM;
Infrastructure to Vehicle Information Messages, IVlM;
Radio Technical Commission for Maritime Services Extended Messages, RTCMEM;
MAP topology Extended Messages, MAPEM;
Maneuver Coordination Messages, MCM;
Signal Phase And Timing Extended Messages, SPATEM;
Signal Request Extended Messages, SREM;
Signal request Status Extended Messages, SSEM; and
Vulnerable Road User Awareness Messages, VAM.

13. A client device configured to perform the method of any preceding claim.

14. A messaging server configured to perform the method of any of claims 1 to 12.

15. A computer program comprising instructions that, when executed on a processor, cause the processor to perform the method of any of claims 1 to 12.
